# EUROPEAN PATENT SPECIFICATION

(11) **EP 0 577 621 B1**
(45) Date of publication and mention of the grant of the patent: **10.04.1996**
(21) Application number: 92905661.2
(22) Date of filing: 28.01.1992
(51) Int. Cl.: D21B 1/26, F16F 15/12

(54) **REFINER**
RAFFINEUR
RAFFINEUR

(30) Priority: 27.03.1991 SE 9100922
(43) Date of publication of application: 12.01.1994
(73) Proprietor: SUNDS DEFIBRATOR INDUSTRIES AKTIEBOLAG, S-851 94 Sundsvall (SE)
(72) Inventor: KJELLQVIST, Olof, S-852 52 Sundsvall (SE)
(74) Representative: Sundqvist, Hans
(86) International application number: PCT/SE92/00050
(87) International publication number: WO 92/17637

(56) References cited:
- US-A- 4 061 279
- US-A- 4 082 139
- US-A- 4 379 707

## Description

This invention relates to a refiner for the manufacture of cellulose pulp, where the raw material, for example wood chips, bagasse, fibre suspensions or the like, is processed in a gap between two opposed refining members, which are rotary relative one another. At least one of the refining members is supported on a rotary refiner shaft which is driven by a motor. An intermediate shaft is coupled non-rotary between the rotor shaft of the motor and the refiner shaft.

At starting of the refiner, the driving motor, a synchronous motor, excites strong oscillating moments, which immediately before the working number of revolutions, the synchronous speed, has been achieved, passes a resonance frequency of the mechanically coupled shafts. The excitation moment from the synchronous motor increases substantially at the passage of the resonance frequency, and a maximum moment develops which can exceed 200 kNm. In view of the maximum moment at the start, the refiner must be overdimensioned in relation to what is required with respect to the other operation conditions.

The present invention solves this problem and implies, that the oscillation moment can be reduced to a level close to the other operation conditions. According to the invention, the torsional oscillations are damped in that a friction damper is provided between the motor and refiner shaft. The characterizing features of the invention are defined in greater detail in the attached claims.

The design of the device according to the invention is simple with few parts, which makes it cheap and easy to install in existing refiners. Further, the function of the device is independent of outer drive or control means.

The invention is described in greater detail in the following, with reference to the accompanying drawings showing some embodiments of the invention.
Fig 1. shows a refiner with a driving motor according to the invention;
Fig 2. shows the coupling principle between motor and refiner according to the invention;
Figs. 3-5 show three embodiments of the friction damper according to the invention.

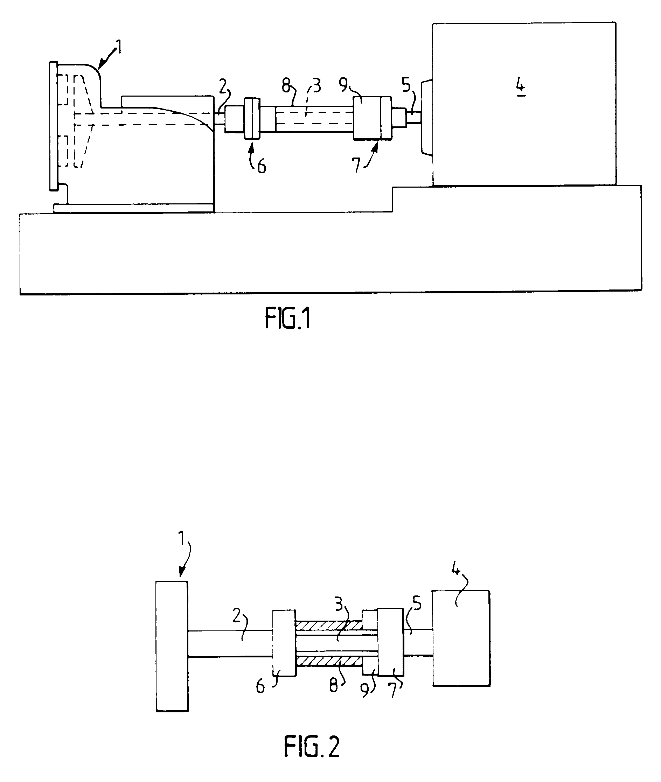

The refiner shown in Fig. 1 is of the single-disc type, i.e. one refining member is stationary and the other one rotary. The rotary refining member is located on a refiner shaft 2, which is coupled to the rotor shaft 5 of the motor via an intermediate shaft 3 by means of a first and, respectively, second coupling 6 and, respectively, 7. The motor is a synchronous motor which in operation maintains a constant speed irrespective of the shaft moment. This is essential at the refining of cellulose material. The motor output can vary between 1 and 20 MW or more, depending on the refiner type. The synchronous motor for a refiner normally has four poles, rendering the motor a synchronous speed of 1500 and, respectively, 1800 rpm at 50 and, respectively, 60 cps alternating current frequency.

The intermediate shaft 3 connecting the motor 4 to the refiner 1 preferably is coupled by bolt joint for taking up axial moments. The intermediate shaft 3 has the object both to move down the neutral frequency of the system where the resonance amplitudes are lower and to act as a safety device at breakdown.

An outer pipe 8 stiff against torsion is provided about the intermediate shaft 3 and concentrically therewith. One end of said pipe is rigidly connected to the first coupling 6 at one end of the intermediate shaft 3. The other end of the pipe 8 is connected by a friction damper 9 to the second coupling 7 at the other end of the intermediate shaft 3.

The friction damper 9 comprises friction surfaces which are pressed against each other. It implies, that the strong torsion oscillations arising at resonance passage can be removed as friction energy in the friction surfaces of the friction damper.

At the start of a refiner, increasing torsion osciallations arise after some seconds due to resonance. When the torque increases to a magnitude causing the friction surfaces to start sliding relative one another - the tear-off moment - the increase in torque is limited to continue. Due to the torsion oscillations, repeated slidings take place thereafter forth and back in the friction damper while simultaneously heat is developing. After some second, the resonance has been passed and the torsion osciallations have ceased.

By using a friction damper of this kind, it was found possible, for example, to reduce the maximum torque at the start of a refiner from 210 kNm to 80 kNm. By optimizing the equipment it should be possible to reduce the maximum torque even further.

The parameters defining the function of the friction damper are a.o. the tear-off moment, the friction moment and the rigidity of the intermediate shaft. A suitable size of the tear-off moment is 30-100% of the effective output of the motor at full load. The diameter of the intermediate shaft is determined in view of the transferred moment. By choosing a suitable length of the intermediate shaft, a desired angle of distortion between the couplings can be obtained.

At a motor output of 15 MW it was found suitable to have a tear-off moment of 20-50 kNm, preferably 30-40 kNm. The friction moment normally amounts to appr. 60% of the tear-off moment. The friction area should be 0,2-0,5 m, preferably 0,3-0,4 m. The rigidity of the intermediate shaft 3 should be between 1,2 and 3,2 MNm/line, preferably 2,0-3,0 MNm/line. It can be dimensioned for a maximum moment during the start of about 80 kNm. At the dimensioning, regard has to be paid to the heat development due to friction. A lower tear-off moment and a lower rigidity of the intermediate shaft, thus, result in increased heat development.

The outer pipe 8 stiff against torsion shall have a rigidity substantilly exceeding the rigidity of the intermediate shaft, suitably a rididity 3-15 times higher and preferably 8-10 times higher.

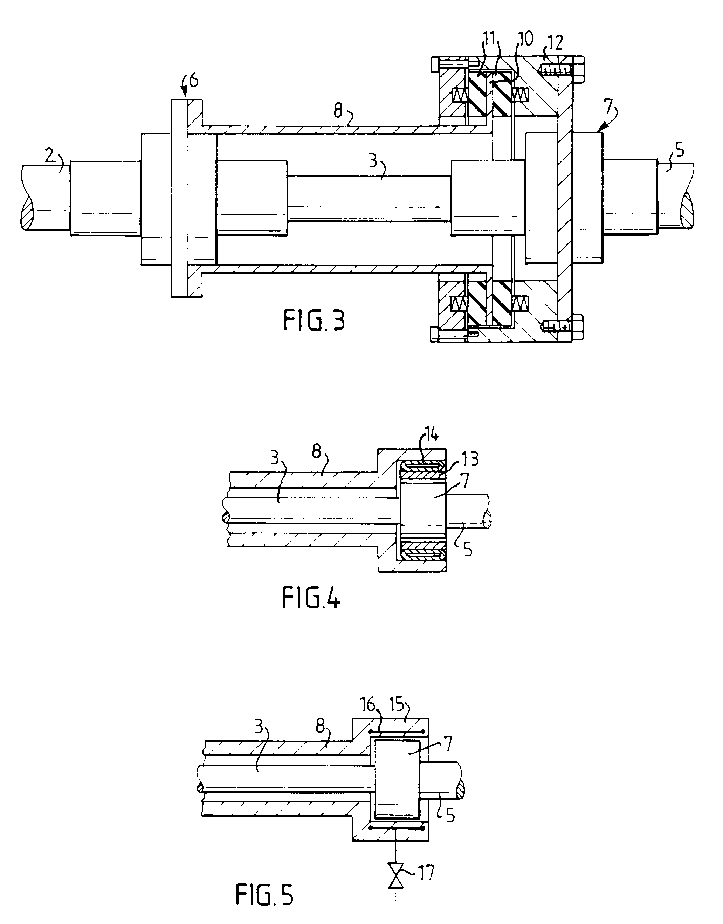

According to the embodiment shown in Fig. 3, the torsion damping is achieved by means of a brake disc 10, which is connected to the pipe 8 stiff against torsion and is held by spring loaded brake blocks 11, which in their turn are located in a yoke 12 on the second coupling 7. The friction surface is oriented substantially radially. By choosing spring-load and brake disc diameter, the damping effect can be determined entirely independent of other operation data in order to bring about a desired damping. Instead of spring-load, another mechanical or hydraulic tightening-up can be arranged.

According to Fig. 4, the friction moment is produced by external brake blocks 13, which are pressed against the second coupling 7 by means of a bellows 14, which expands by pressurizing an incompressible fluid in the bellows. Alternatively, a mechanical tightening-up can be arranged. The friction surface here is oriented axially. According to other alternatives (not shown), the friction surfaces, of course, can be arranged at different angles between radial and axial.

According to Fig. 5, the friction moment is produced by means of a sleeve 15 composite with the pipe 3 and having an oil gap 16 extending all about. The sleeve 15 extends about the second coupling 7 so as to form a friction surface between them. The tightening is effected by hydraulic pressure in the oil gap 16 via a valve 17. This design can easily be made rigid. It comprises few parts, has little inertia mass, and the friction moment can be adjusted easily.

The invention, of course, is not restricted to the embodiments shown, but can be varied within the scope of the invention idea.

## Claims

1. A refiner for the manufacture of cellulose pulp where the raw material is processed in a gap between two opposed refining members rotary relative one another, and where at least one of said refining members is supported on a rotary refiner shaft (2) driven by a motor (4), where an intermediate shaft (3) is connected non-rotary to a first and, respectively, second coupling (6 and, respectively, 7) between the rotor shaft (5) of the motor (4) and the refiner shaft (2) for transferring the drive moment, **characterized in** that an outer pipe (8) stiff against torsion is provided concentrically with the intermediate shaft (3), that one end of the pipe (8) is rigidly connected to the first coupling (6) at one end of the intermediate shaft, and that the other end of the pipe (8) is connected by means of a friction damper (9) to the second coupling (7) at the other end of the intermediate shaft.

2. A refiner as defined in claim 1, **characterized in** that the rigidity of the outer pipe is 3-15 times, preferably 8-10 times greater than the rigidity of the intermediate shaft (3).

3. A refiner as defined in claim 1 or 2, **characterized in** that the friction damper (9) is arranged so that its friction surfaces start to slide in relation to one another at a torque, tear-off moment, which is 30-100% of the effective output of the motor at full load.

4. A refiner as defined in anyone of the preceding claims, **characterized in** that the friction damper (9) comprises a substantially radial brake disc (10) rigidly connected to the pipe (8) stiff against torsion, which brake disc is held by brake blocks (11) located in a yoke (12) on the second coupling (7) for mechanical or hydraulic tightening.

5. A refiner as defined in anyone of the claims 1-3, **characterized in** that the friction damper (9) comprises brake blocks (13) extending about the second coupling (7), which brake blocks are pressed against the coupling (7) by a pressing means (14).

6. A refiner as defined in anyone of the claims 1-3, **characterized in** that the friction damper (9) comprises a sleeve (15) composite with the pipe (8) and extending about the second coupling :(7) so that a friction surface is formed therebetween, and the tightening is effected by a pressurized oil gap (16) extending all about in the sleeve (15).

## Patentansprüche

1. Refiner für die Herstellung von Zellulosepulpe, wobei das Rohmaterial in einem Spalt zwischen zwei gegenüber liegenden Refinerelementen bearbeitet wird, die sich relativ zueinander drehen, und wobei wenigstens eines dieser Refinerelemente auf einer umlaufenden Refinerwelle (2) angebracht ist, die durch einen Motor (4) angetrieben wird, wobei ferner eine Zwischenwelle (3) nicht verdrehbar mit einer ersten bzw. zweiten Kupplung (6) bzw. (7) zwischen der Rotorwelle (5) des Motors (4) und der Refinerwelle (2) zum Übertragen des Antriebsmomentes verbunden ist,
**dadurch gekennzeichnet,**
daß ein gegen Torsion steifes, äußeres Rohr (8) konzentrisch zu der Zwischenwelle (3) vorgesehen ist, das ein Ende des Rohres (8) starr mit der ersten Kupplung (6) am einen Ende der Zwischenwelle verbunden ist, und daß das andere Ende des Rohres (8) mittels einer Reibungsdämpfung (9) mit der zweiten Kupplung (7) am anderen Ende der Zwischenwelle verbunden ist.

2. Refiner nach Anspruch 1, dadurch gekennzeichnet, daß die Steifigkeit des äußeren Rohres 3 bis 15 mal, vorzugsweise 8 bis 10 mal größer ist als die Steifigkeit der Zwischenwelle (3).

3. Refiner nach Anspruch 1 oder 2, dadurch gekennzeichnet, daß die Reibungsdämpfung (9) so angeordnet ist, daß ihre Reibungsflächen relativ zueinander bei einem Dreh-Abreißmoment zu gleiten beginnen, das 30 bis 100 % der effektiven Ausgangsleistung des Motors bei voller Last ist.

4. Refiner nach einem der vorhergehenden Ansprüche,
**dadurch gekennzeichnet,**
daß die Reibungsdämpfung (9) eine im wesentlichen radiale Bremsschreibe (10) umfaßt, die mit dem Rohr (8) starr verbunden ist, das gegenüber Torsion steif ist, wobei die Bremsscheibe durch Bremsblöcke (11) gehalten wird, die an einem Joch (12) an der zweiten Kupplung (7) zum mechanischen oder hydraulischen Spannen angeordnet sind.

5. Refiner nach einem der Ansprüche 1 bis 3, dadurch gekennzeichnet, daß die Reibungsdämpfung (9) Bremsblöcke (13) umfaßt, die sich um die zweite Kupplung (7) erstrecken, wobei die Bremsblöcke durch eine Preßeinrichtung (14) gegen die Kupplung (7) gepreßt werden.

6. Refiner nach einem der Ansprüche 1 bis 3,
**dadurch gekennzeichnet,**
daß die Reibungsdämpfung (9) eine Hülse (15) umfaßt, die mit dem Rohr (8) zusammengebaut ist und sich um die zweite Kupplung (7) erstreckt, so daß eine Reibungsfläche dazwischen ausgebildet wird, und daß das Festspannen durch einem mit unter Druck stehendem Öl gefüllten Spalt (16) bewirkt wird, der sich um die gesamte Hülse (15) erstreckt.

## Revendications

1. Raffineuse pour la fabrication de pâte brute de cellulose où la matière brute est traitée dans un intervalle entre deux éléments de raffinage opposés tournant l'un par rapport à l'autre et où au moins l'un desdits éléments de raffinage est supporté par un arbre de raffineuse rotatif (2) entraîné par un moteur (4), où un arbre intermédiaire (3) est relié, de façon non rotative à un premier et, respectivement un second accouplement (6 et, respectivement, 7) entre l'arbre du rotor (5) du moteur (4) et l'arbre de la raffineuse (2) pour transférer le moment d'entraînement, caractérisée en ce qu'on prévoit une conduite externe (8) résistant à la torsion, concentrique à l'arbre intermédiaire (3), en ce que une extrémité de la conduite (8) est reliée rigidement au premier accouplement (6) à une extrémité de l'arbre intermédiaire et, en ce que l'autre extrémité de la conduite (8) est connectée, par l'intermédiaire d'un amortisseur à friction (9), au second accouplement (7), à l'autre extrémité de l'arbre intermédiaire.

2. Raffineuse selon la revendication 1, caractérisée en ce que la rigidité de la conduite extérieure est 3-15 fois, de préférence 8-10 fois supérieure à la rigidité de l'arbre intermédiaire (3).

3. Raffineuse selon la revendication 1 ou 2, caractérisée en ce que l'amortisseur à friction (9) est disposé de manière que ses surfaces de frottement commencent à glisser l'une par rapport à l'autre pour un couple, moment d'arrachement, qui est de 30-100 % du rendement effectif du moteur à pleine charge.

4. Raffineuse tel que défini dans l'une quelconque des revendications précédentes, caractérisée en ce que l'amortisseur à friction (9) comprend un disque de frein sensiblement radial (10) connecté rigidement à la conduite (8), rigide à l'encontre de la torsion, lequel disque de frein est maintenu par des sabots de frein (11) situés dans un étrier (12) sur le second accouplement (7) pour un serrage mécanique ou hydraulique.

5. Raffineuse selon l'une quelconque des revendications 1-3, caractérisée en ce que l'amortisseur à friction (9) comprend des sabots de frein (13) s'étendant autour du second accouplement (7), lesquels sabots de frein sont appliqués contre l'accouplement (7) par des moyens de pression (14).

6. Raffineuse selon l'une quelconque des revendications 1-3, caractérisée en ce que l'amortisseur à friction (9) comprend un manchon (15) composite avec la conduite (8) et s'étendant autour du second accouplement (7), de façon qu'une surface de frottement se forme entre ces éléments, et le serrage est réalisé par un intervalle d'huile sous pression (16) s'étendant tout autour dans le manchon (15).
